# EUROPEAN PATENT APPLICATION

(11) **EP 4 794 177 A1**
(43) Date of publication of application: **19.08.2026**
(21) Application number: 24876515.8
(22) Date of filing: 08.10.2024
(51) Int. Cl.: H02K 9/19

(54) **MOTOR OIL-COOLING STRUCTURE AND MOTOR**

(30) Priority: 12.10.2023 CN 202322747697 U; 13.10.2023 CN 202322760873 U; 13.10.2023 CN 202322761498 U
(71) Applicant: Shanghai Lixiang Automobile Co., Ltd., Shanghai 201800 (CN)
(72) Inventor: ZENG, Jun, Shanghai 201800 (CN); XIE, Pengtao, Shanghai 201800 (CN); XIA, Bingbing, Shanghai 201800 (CN); XIE, Xi, Shanghai 201800 (CN)
(74) Representative: advotec.
(86) International application number: PCT/CN2024/123486
(87) International publication number: WO 2025/077701

(57) **Abstract**

The present application relates to the technical field of motor cooling, and in particular relates to a motor oil-cooling structure and a motor. The motor oil-cooling structure comprises an energy storage ring and a bushing coaxially arranged in an axial direction of the motor. The bushing is coaxially sleeved between a stator and a rotor, and a plurality of oil passages are correspondingly formed between the outer circumferential surface of the bushing and a plurality of stator slots. The energy storage ring comprises coaxially sleeved outer and inner rings, an oil cavity is formed between the outer ring and the inner ring and used for accommodating a portion of a winding extending out of the stator slots, and the oil cavity is in communication with the plurality of oil passages. In this motor oil-cooling structure, the bushing is arranged to separate the space where the stator is located from a rotor installation cavity to form two independent chambers, and the oil passages for cooling the winding are formed between the stator and the bushing. When a cooling oil flows through the oil passages, positions on the stator in contact with the cooling oil may be cooled, thereby improving the overall cooling efficiency of the motor.

## Description

### CROSS-REFERENCE TO RELATED APPLICATIONS

This application is filed based on Chinese Patent Application No. 202322747697.6 filed on October 12, 2023, Chinese Patent Application No. 202322760873.X filed on October 13, 2023, and Chinese Patent Application No. 202322761498.0 filed on October 13, 2023, and claims the priority of the above three Chinese patent applications. The entire contents of the above three Chinese patent applications are incorporated herein by reference.

### FIELD

The present application relates to the technical field of motor cooling, and in particular, to a motor oil-cooling structure and a motor.

### BACKGROUND

Drive motors in new energy vehicles generate a large amount of heat during operation. Currently, a common motor cooling manner is to cool a motor stator with cooling oil. Existing oil-cooling structures often may only cool a stator core. It is difficult for the cooling oil to flow into stator slots from end surface notches of the stator slots, and the cooling oil cannot directly cool a winding located in the stator slots, thus affecting the cooling and heat dissipation effect of the entire motor.

### SUMMARY

To solve the above technical problems, the present disclosure provides a motor oil-cooling structure and a motor.

In a first aspect, the present disclosure provides a motor oil-cooling structure, including an energy storage ring and a bushing coaxially arranged along an axial direction of a motor.

The bushing is coaxially sleeved between a stator and a rotor, and a plurality of oil passing grooves are correspondingly formed between an outer circumferential surface of the bushing and a plurality of stator slots.

The energy storage ring includes an outer ring and an inner ring coaxially sleeved, an oil cavity is formed between the outer ring and the inner ring for accommodating a portion of a winding extending out of the stator slots, and the oil cavity is in communication with the plurality of oil passing grooves. An end surface of the outer ring facing the stator in an axial direction of the outer ring is at least partially connected to an axial end surface of the stator, and an end surface of the inner ring facing the bushing in an axial direction of the inner ring is at least partially connected to an axial end surface of the bushing.

Optionally, an end surface of the outer ring away from the stator in the axial direction of the outer ring and an end surface of the inner ring away from the bushing in the axial direction of the inner ring are connected via a sealing portion, and at least one of the outer ring, the inner ring, and the sealing portion has an oil inlet in communication with the oil cavity.

Optionally, the oil cavity is an annular groove structure arranged coaxially with the energy storage ring.

Optionally, the motor oil-cooling structure further includes a sealing plate arranged coaxially with the energy storage ring and the bushing. The sealing plate has an annular structure, is connected to the axial end surface of the bushing, and is located between the energy storage ring and the bushing.

The end surface of the outer ring facing the stator in the axial direction of the outer ring is at least partially connected to an outer edge portion of the sealing plate, and the end surface of the inner ring facing the bushing in the axial direction of the inner ring is at least partially connected to an inner edge portion of the sealing plate. An end surface of the sealing plate facing the stator is arranged in contact with the axial end surface of the stator.

The sealing plate has oil passing holes corresponding one-to-one to the plurality of oil passing grooves along a circumferential direction of the sealing plate, and the oil passing holes are configured to communicate the oil cavity with the oil passing grooves.

Optionally, a shape of the oil passing hole matches a shape of an axial end surface of the oil passing groove, and in the axial direction of the sealing plate, a projection of the oil passing groove falls within a projection range of the oil passing hole.

Optionally, the sealing plate has an elastic structure.

Optionally, the sealing plate is integrally formed with the bushing.

Optionally, the end surface of the outer ring facing the stator in the axial direction of the outer ring has a first annular groove; the end surface of the inner ring facing the bushing in the axial direction of the inner ring has a second annular groove; and a first sealing ring and a second sealing ring are correspondingly arranged in the first annular groove and the second annular groove.

Optionally, the sealing plate has a third engaging groove engaging with the outer ring, and the outer ring engages with the third engaging groove to form a first sealing structure; the sealing plate has a fourth engaging groove engaging with the inner ring, and the inner ring engages with the fourth engaging groove to form a second sealing structure.

Optionally, the outer circumferential surface of the bushing is arranged in contact with the stator to isolate each of the oil passing grooves.

In a second aspect, the present disclosure provides a motor, including the motor oil-cooling structure as described above, and a housing, where the housing has a step abutting against the energy storage ring.

Compared with the related art, the technical solutions provided by embodiments of the present disclosure have the following advantages.

In the motor oil-cooling structure provided by the present disclosure, by arranging the bushing, the space where the stator is located is separated from the rotor installation cavity to form two independent chambers. Meanwhile, the oil passing grooves for cooling the winding are formed between the stator and the bushing. It should be understood that the stator slots belong to a part of the oil passing grooves. The oil cavity is in communication with the oil passing grooves. Cooling oil may enter the oil passing grooves from between the outer ring and the inner ring through the stator slots, flow along an extension direction of the winding, and cool the winding. When the cooling oil flows in the oil passing grooves, it may also cool the stator at positions in contact with the cooling oil, improving the cooling efficiency of the entire motor. It should be understood that the end portions of the winding extending out of the stator slots may always be immersed in the cooling oil within the oil cavity.

In the motor oil-cooling structure provided by the present disclosure, by arranging the bushing between the stator and the rotor, the outer circumferential surface of the bushing and the plurality of stator slots have formed the plurality of oil passing grooves. It should be understood that the stator slots belong to a part of the oil passing grooves, that is, the winding located in the stator slots are also located in the oil passing grooves. The energy storage ring includes the coaxially arranged outer ring and inner ring. The end surface of the outer ring facing the stator in the axial direction of the outer ring is at least partially connected to the axial end surface of the stator, and the end surface of the inner ring facing the bushing in the axial direction of the inner ring is at least partially connected to the axial end surface of the bushing. The oil cavity is formed between the outer ring and the inner ring, and the oil cavity is in communication with the plurality of oil passing grooves. In this way, the winding extending out of the stator slots may be immersed in the oil cavity and cooled by the cooling oil. The cooling oil may also enter the oil passing grooves from the oil cavity. After entering the oil passing grooves, the cooling oil may contact the winding to cool the winding, and may also contact the inner walls of the stator slots to cool the stator, improving the cooling efficiency of the entire motor.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.

In order to more clearly illustrate the technical solutions in embodiments of the present disclosure or in the related art, the drawings required to be used in the description of the embodiments or the related art will be briefly introduced below. Apparently, for those of ordinary skill in the art, other drawings may be obtained based on these drawings without creative efforts.
FIG. 1 is a schematic structural diagram of a motor oil-cooling structure according to an embodiment of the present disclosure;
FIG. 2 is a partial enlarged view of FIG. 1;
FIG. 3 is a schematic structural diagram of an energy storage ring in a motor oil-cooling structure according to an embodiment of the present disclosure;
FIG. 4 is a schematic structural diagram of a bushing and a sealing plate in a motor oil-cooling structure according to an embodiment of the present disclosure;
FIG. 5 is a schematic structural diagram of a bushing in a motor oil-cooling structure according to an embodiment of the present disclosure;
FIG. 6 is a schematic structural diagram of a stator in a motor oil-cooling structure according to an embodiment of the present disclosure;
FIG. 7 is a schematic diagram showing cooperation between a bushing and a stator in a motor oil-cooling structure according to an embodiment of the present disclosure;
FIG. 8 is a partial enlarged view of FIG. 7;
FIG. 9 is a schematic structural diagram of a stator in a motor oil-cooling structure according to another embodiment of the present disclosure;
FIG. 10 is a schematic structural diagram of a bushing in a motor oil-cooling structure according to another embodiment of the present disclosure;
FIG. 11 is a partial enlarged structural schematic diagram of a bushing and a stator in a motor oil-cooling structure according to another embodiment of the present disclosure;
FIG. 12 is a schematic structural diagram of a bushing and a stator in a motor oil-cooling structure according to an embodiment of the present disclosure, with a bushing body in a retracted state.
In the drawings: 1 Energy storage ring; 11 Oil inlet; 121 Outer ring; 122 Inner ring; 13 Oil cavity; 141 First annular groove; 142 Second annular groove; 15 Sealing portion; 161 First sealing ring; 162 Second sealing ring; 2 Bushing; 21 Bushing body; 22 Positioning ring; 23 Support portion; 24 First expansion portion; 25 Second expansion portion; 31 Stator; 311 Stator slot; 312 Adhesive; 32 Rotor installation cavity; 33 Winding; 4 Oil passing groove; 5 Sealing plate; 51 Oil passing hole; 6 Housing; 61 Step.

### DETAILED DESCRIPTION

In order to more clearly understand the above objects, features, and advantages of the present disclosure, the solutions of the present disclosure will be further described below. It should be noted that, in the case of no conflict, embodiments of the present disclosure and features in the embodiments may be combined with each other.

In the following description, many specific details are set forth to facilitate a full understanding of the present disclosure. However, the present disclosure may also be implemented in other ways different from those described herein. Obviously, the embodiments in the description are only a part of the embodiments of the present disclosure, rather than all of the embodiments.

Based on this, the present embodiment provides a motor oil-cooling structure and a motor. By arranging the bushing, the space where the stator is located is separated from the rotor installation cavity to form two independent chambers. Meanwhile, the oil passing grooves for cooling the winding are formed between the stator and the bushing. It should be understood that the stator slots belong to a part of the oil passing grooves. Cooling oil may flow through the end surface notches of the stator slots from between the outer ring and the inner ring into the oil passing grooves, flow along the extension direction of the winding, and cool the winding. When the cooling oil flows in the oil passing grooves, it may also cool the stator at positions in contact with the cooling oil, improving the cooling efficiency of the entire motor. It should be understood that the end portions of the winding extending out of the stator slots may always be immersed in the cooling oil within the oil cavity. A detailed description is provided below through specific embodiments.

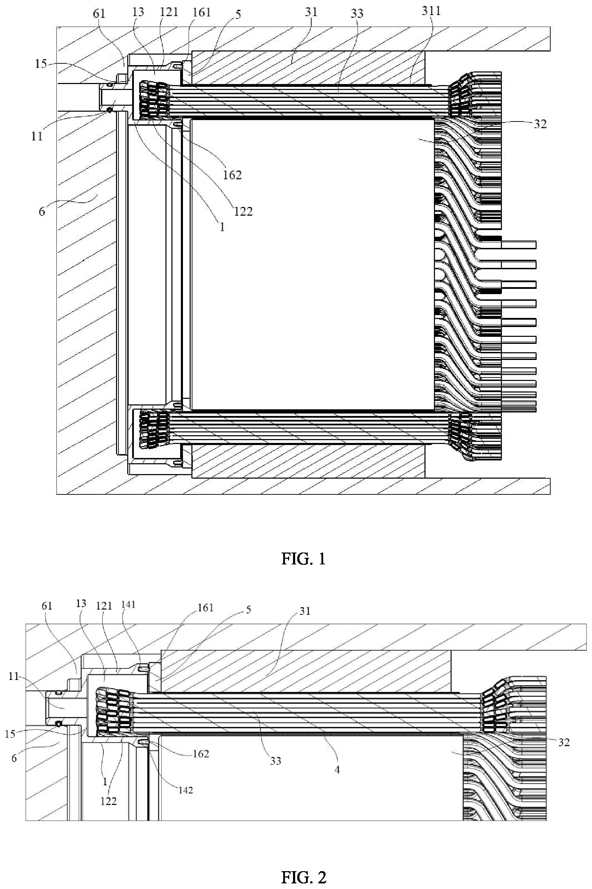

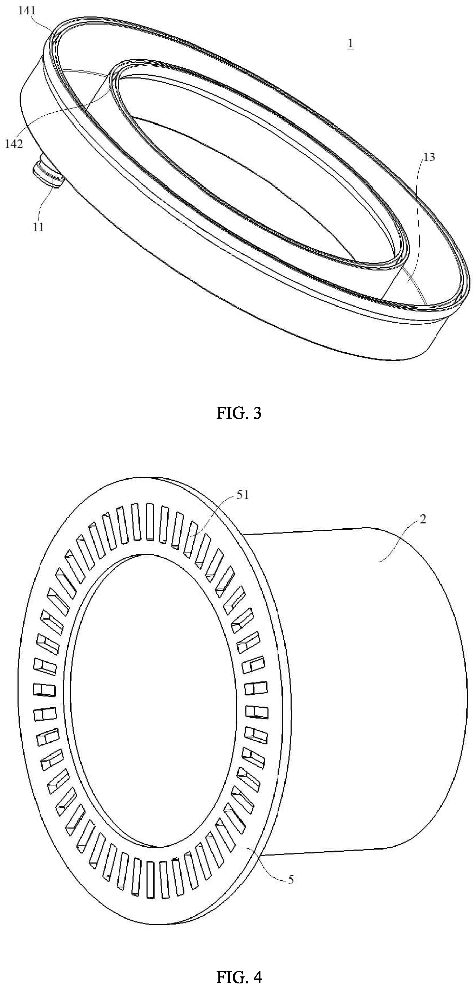

As illustrated in FIGS. 1 to 4, a motor oil-cooling structure provided by the present embodiment includes an energy storage ring 1 and a bushing 2 coaxially arranged along an axial direction of a motor. The bushing 2 is coaxially sleeved between a stator 31 and a rotor. Here, both the energy storage ring 1 and the bushing 2 may be mounted on a housing 6 of the motor, or may be mounted on the stator 31 or the rotor. It may be seen from FIG. 1 that the bushing 2 isolates the stator 31 from a rotor installation cavity 32 to form two chambers. A plurality of oil passing grooves 4 are correspondingly formed between an outer circumferential surface of the bushing 2 and a plurality of stator slots 311. The energy storage ring 1 includes an outer ring 121 and an inner ring 122 coaxially sleeved. An oil cavity 13 is formed between the outer ring 121 and the inner ring 122 for accommodating a portion of winding 33 extending out of the stator slots 311. The oil cavity 13 is in communication with the plurality of oil passing grooves 4. An end surface of the outer ring 121 facing the stator 31 in an axial direction of the outer ring 121 is at least partially connected to an axial end surface of the stator 31, and an end surface of the inner ring 122 facing the bushing 2 in an axial direction of the inner ring 122 is at least partially connected to an axial end surface of the bushing 2.

In the motor oil-cooling structure provided by the present embodiment, by arranging the bushing 2 between the stator 31 and the rotor, the outer circumferential surface of the bushing 2 and the plurality of stator slots 311 have formed the plurality of oil passing grooves 4. It should be understood that the stator slots 311 belong to a part of the oil passing grooves 4, that is, the winding located in the stator slots 311 are also located in the oil passing grooves 4. The energy storage ring 1 includes the coaxially arranged outer ring 121 and inner ring 122. The end surface of the outer ring 121 facing the stator 31 in the axial direction of the outer ring 121 is at least partially connected to the axial end surface of the stator 31, and the end surface of the inner ring 122 facing the bushing 2 in the axial direction of the inner ring 122 is at least partially connected to the axial end surface of the bushing 2. The oil cavity 13 is formed between the outer ring 121 and the inner ring 122, and the oil cavity 13 is in communication with the plurality of oil passing grooves 4. In this way, the winding extending out of the stator slots 311 may be immersed in the oil cavity and cooled by the cooling oil. The cooling oil may also enter the oil passing grooves 4 from the oil cavity 13. After entering the oil passing grooves 4, the cooling oil may contact the winding to cool the winding, and may also contact the inner walls of the stator slots 311 to cool the stator 31, improving the cooling efficiency of the entire motor.

In some embodiments, the end surface of the outer ring 121 away from the stator 31 in the axial direction of the outer ring 121 and the end surface of the inner ring 122 away from the bushing 2 in the axial direction of the inner ring 122 are connected via a sealing portion 15, and at least one of the outer ring 121, the inner ring 122, and the sealing portion 15 has an oil inlet 11 in communication with the oil cavity 13. By arranging the sealing portion 15, the entire energy storage ring 1 forms an annular structure with a groove in one axial end surface. Three side walls of the groove are respectively the inner ring 122, the outer ring 121, and the sealing portion 15, and an axial port abuts against the stator 31 and the bushing 2 to form the oil cavity 13.

With continued reference to FIGS. 1 to 3, the oil cavity 13 is an annular groove structure arranged coaxially with the energy storage ring 1. That is, the oil cavity 13 may provide a cooling oil immersion space for the end portions of all the windings 33 arranged along the circumferential direction, significantly improving the cooling effect of the windings 33. Moreover, such an arrangement also allows for more flexible selection of the position for arranging the oil inlet 11. It should be understood that a plurality of oil inlets 11 may be provided, and the oil inlets 11 may be arranged on the axial end surface of the energy storage ring 1, that is, on the sealing portion 15, or may be arranged on the circumferential side wall of the energy storage ring 1, that is, on the inner ring 122 or the outer ring 121.

In some embodiments, the outer circumferential surface of the bushing 2 is arranged in contact with the stator 31 to isolate each of the oil passing grooves 4. Such an arrangement may prevent the temperature rise of a winding 33 from affecting the winding 33 in other stator slots 311 through the cooling oil, and may also provide a flow guiding effect for the oil passing grooves 4, ensuring that the cooling oil flows quickly along a set direction, improving cooling efficiency while reducing the probability of turbulent flow of the cooling oil in the oil passing grooves 4.

In some embodiments, the oil inlet 11 is arranged on the sealing portion 15. Specifically, the oil inlet 11 faces the oil passing grooves 4 in the axial direction of the motor, so that cooling oil flowing from the oil inlet 11 into the oil cavity 13 may flow directly toward the oil passing grooves 4, making the entire oil inlet path more reasonable and further reducing the probability of turbulent flow of the cooling oil in the oil cavity 13.

With continued reference to FIGS. 1, 2, and 4, the motor oil-cooling structure further includes a sealing plate 5 arranged coaxially with the energy storage ring 1 and the bushing 2. The sealing plate 5 has an annular structure, is connected to the axial end surface of the bushing 2, and is located between the energy storage ring 1 and the bushing 2. The end surface of the outer ring 121 facing the stator 31 in the axial direction of the outer ring 121 is at least partially connected to an outer edge portion of the sealing plate 5, and the end surface of the inner ring 122 facing the bushing 2 in the axial direction of the inner ring 122 is at least partially connected to an inner edge portion of the sealing plate 5. The end surface of the sealing plate 5 facing the stator 31 is arranged in contact with the axial end surface of the stator 31. The sealing plate 5 has oil passing holes 51 corresponding one-to-one to the plurality of oil passing grooves 4 along a circumferential direction of the sealing plate 5, and the oil passing holes 51 are used to communicate the oil cavity 13 with the oil passing grooves 4. By arranging the sealing plate 5, the sealing effect at the sealing positions between the energy storage ring 1, the bushing 2, and the stator 31 may be further improved. Here, the axial end surfaces on both sides of the sealing plate 5 may be adaptively processed according to the shapes of the end surfaces of the energy storage ring 1 and the stator 31, so that the connection between the sealing plate 5 and the energy storage ring 1 and the connection between the sealing plate 5 and the stator 31 are tighter and more stable.

In some embodiments, the shape of the oil passing hole 51 matches the shape of the axial end surface of the oil passing groove 4, and in the axial direction of the sealing plate 5, the projection of the oil passing groove 4 falls within the projection of the oil passing hole 51. Such an arrangement may prevent the oil passing hole 51 from interfering with the oil inlet of the oil passing groove 4, ensuring the oil inlet efficiency of the oil passing groove 4.

In further embodiments, the sealing plate 5 has an elastic structure. Here, the sealing plate 5 may be made of an elastic material such as plastic or rubber. Such an arrangement may further improve the sealing effect of the sealing plate 5 by utilizing the squeezing between the energy storage ring 1 and the stator 31.

In some embodiments, the sealing plate 5 is integrally formed with the bushing 2. Specifically, the sealing plate 5 may be made of the same material as the bushing 2 or may be made of a different material. The two may be connected into an integral structure by means such as injection molding or bonding, or may be directly formed into an integral structure by casting. Such an arrangement may ensure the sealing effect at the connection between the sealing plate 5 and the bushing 2, while also reducing the number of parts and simplifying the structure.

With continued reference to FIGS. 1 to 3, the end surface of the outer ring 121 facing the stator 31 in the axial direction of the outer ring 121 has a first annular groove 141. The end surface of the inner ring 122 facing the bushing 2 in the axial direction of the inner ring 122 has a second annular groove 142. A first sealing ring 161 and a second sealing ring 162 are correspondingly arranged in the first annular groove 141 and the second annular groove 142. It should be understood that the first sealing ring 161 is deformed by being squeezed by the first annular groove 141 and the outer edge portion of the sealing plate 5 to form a first sealing structure, and the second sealing ring 162 is deformed by being squeezed by the second annular groove 142 and the inner edge portion of the sealing plate 5 to form a second sealing structure. By arranging the first annular groove 141, the second annular groove 142, the first sealing ring 161, and the second sealing ring 162, leakage of the cooling oil from the oil cavity 13 to other positions inside the motor may be prevented, ensuring that the cooling oil entering from the oil inlet 11 may flow along the oil passing grooves 4 to effectively cool the winding 33, significantly improving the cooling efficiency of the winding 33.

In some embodiments, the sealing plate 5 has a third engaging groove engaging with the outer ring 121, and the outer ring 121 engages with the third engaging groove to form a first sealing structure. The sealing plate 5 has a fourth engaging groove engaging with the inner ring 122, and the inner ring 122 engages with the fourth engaging groove to form a second sealing structure. By arranging the third engaging groove and the fourth engaging groove, not only the sealing effect at the sealing positions of the outer ring 121 and the inner ring 122 may be improved, but also preliminary mounting positions may be provided for the outer ring 121 and the inner ring 122, preventing the outer ring 121 and the inner ring 122 from frequently falling into the motor interior during installation.

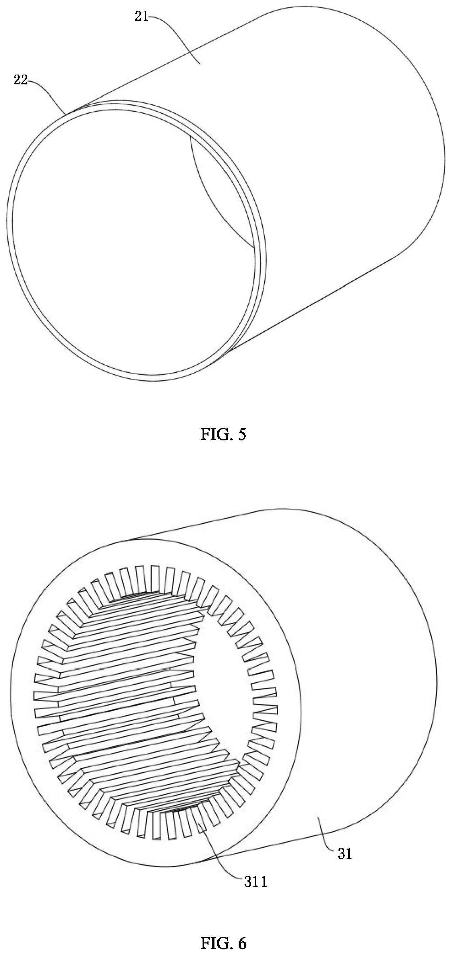

In some embodiments, as illustrated in FIG. 5, the bushing 2 includes a bushing body 21. An outer wall surface of the bushing body 21 is arranged in contact with an inner wall surface of the stator 31, and the bushing body 21 extends along the axial direction of the stator 31.

Specifically, as illustrated in FIG. 5, the bushing body 21 is cylindrical. The interior of the bushing body 21 is hollow, and the rotor is passed through the interior of the bushing body 21. It should be noted that the bushing body 21 may be integrally formed. In other words, the outer peripheral surface of the bushing body 21 is a complete curved surface, and there is no gap on the outer peripheral surface of the bushing body 21.

The outer peripheral surface of the bushing body 21 is in contact with the inner wall surface of the stator 31, sealing the stator slots 311 on the stator 31 in the radial direction, and preventing cooling oil in the stator slots 311 from flowing into the air gap between the rotor and the stator 31 in the radial direction.

For example, the bushing body 21 is made of a heat-expandable material. In other words, when the bushing body 21 is heated, it expands, ensuring that the bushing body 21 may be brought into better contact with the inner wall surface of the stator 31.

Specifically, as illustrated in FIGS. 6-8, the stator 31 has a plurality of stator slots 311. The bushing body 21 and the plurality of stator slots 311 enclose to form corresponding plurality of oil passing grooves 4. The stator slots 311 extend along the axial direction of the stator 31. In other words, the stator slots 311 penetrate the stator 31 in a left-right direction. The winding 33 may be placed in the stator slots 311, and cooling oil may flow in the stator slots 311. The bushing 2 is passed through the interior of the stator 31. The outer wall surface of the bushing body 21 is in contact with the inner wall surface of the stator 31. The opening of the stator slot 311 in the radial direction of the stator 31 is sealed by the bushing body 21 to form a corresponding oil passing groove 4, isolating the communication between the stator slot 311 and the air gap in the radial direction of the stator 31, reducing the flow of cooling oil from the stator slot 311 into the air gap between the stator 31 and the rotor.

It may be understood that, as mentioned above, the stator slots 311 belong to a part of the oil passing grooves 4. After entering the oil passing grooves 4, the cooling oil may contact the winding 33 to cool the winding 33, and may also contact the inner walls of the stator slots 311 to cool the stator 31. That is, the stator slots 311, in addition to accommodating the winding 33, are also used to accommodate the cooling medium (cooling oil) to achieve a cooling effect. Therefore, in some cases, the stator slots 311 may also be referred to as cooling slots of the stator 31.

By installing the bushing body 1 between the stator 31 and the rotor of the motor, the communication between the stator slots 311 and the air gap between the stator 31 and the rotor may be blocked in the radial direction, preventing cooling oil from flowing from the stator slots 311 into the air gap, and improving the cooling efficiency of the motor oil-cooling structure.

In some embodiments, the bushing 2 further includes a positioning ring 22. The positioning ring 22 is connected to the bushing body 21, and the positioning ring 22 is adapted to be in contact with an end portion of the stator 31.

Specifically, as illustrated in FIG. 5, the positioning ring 22 is further arranged on a left end of the bushing body 21. The positioning ring 22 surrounds the bushing body 21, i.e., the inner wall surface of the positioning ring 22 is connected to the outer wall surface of the bushing body 21. When the bushing 2 is connected to the stator 31, the right end surface of the positioning ring 22 is in contact with the left end surface of the stator 31. By arranging the positioning ring 22, when the bushing 2 is assembled with the stator 31, axial positioning may be provided for the bushing 2, improving the assembly accuracy between the bushing 2 and the stator 31, and also reducing the axial displacement of the bushing 2 relative to the stator 31.

It should be noted that the positioning ring 22 may be arranged at either the left end or the right end of the bushing body 21.

In some embodiments, the bushing body 21 is an elastic bushing body 21.

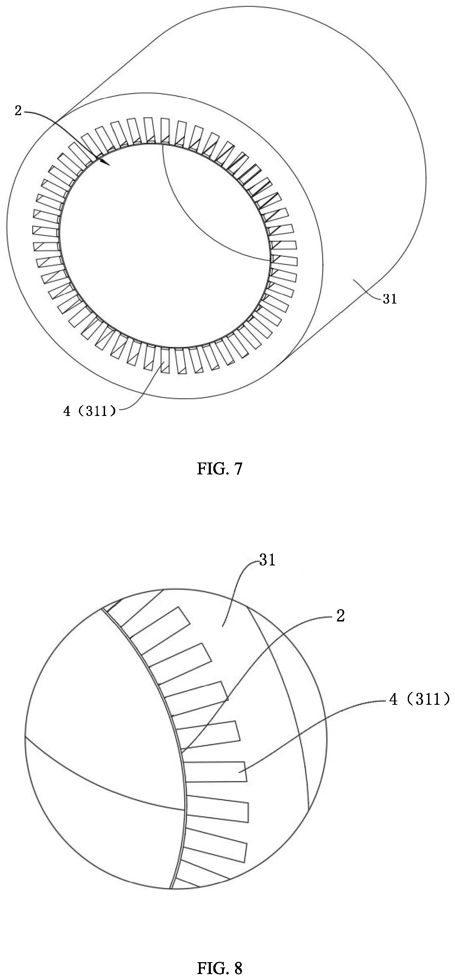

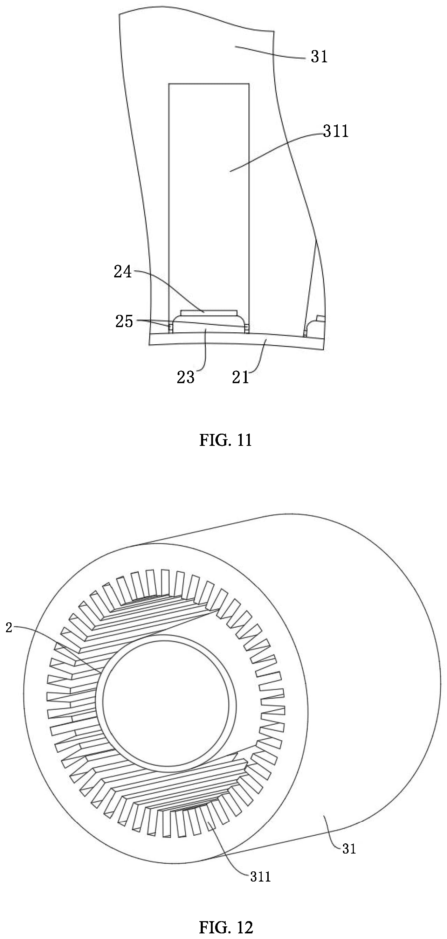

Specifically, as illustrated in FIGS. 7 and 12, the bushing body 21 is an elastic bushing. When the bushing body 21 is being installed into the stator 31, the diameter of the bushing body 21 is smaller than the inner diameter of the stator 31. After the bushing body 21 is installed into the stator 31, the bushing body 21 expands under the action of its elastic restoring force, and the bushing body 21 may be in close contact with the inner wall of the stator 31, enabling the bushing body 21 to seal the radial opening of the stator slot 311, and ensuring that the cooling medium moves only within the stator slot 311 along the axial direction of the stator 31.

For example, the material of the bushing body 21 may be PEI (Polyetherimide). PEI has elastic restoring properties. Those skilled in the art may also set the first expansion portion 4 to other materials, which is not limited here.

In some embodiments, the positioning ring 22 is integrally formed with the bushing body 21. The positioning ring 22 being integrally formed with the bushing body 21 may improve the structural strength of the positioning ring 22, improving the structural stability of the entire bushing 2.

In some embodiments, the thickness of the bushing body 21 is A, and A ≤ 1/5 S, where S is a width of the air gap between the stator 31 and the rotor.

For example, when the width of the air gap between the stator 31 and the rotor is 5 mm, the thickness A of the bushing body 21 is 1 mm, 0.8 mm, or 0.5 mm. It should be noted that when the thickness of the bushing 2 is too large, it will occupy the width of the air gap between the stator 31 and the rotor, adversely affecting the performance of the motor.

In some embodiments, the bushing body 21 is detachably connected to the stator 31.

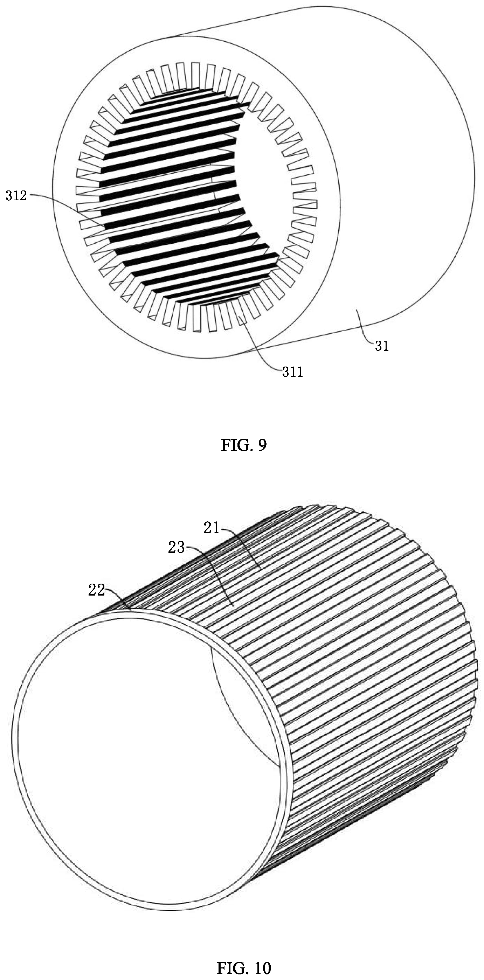

For example, as illustrated in FIG. 9, an adhesive 312 is applied to the outer wall surface of the bushing body 21, or the adhesive 312 is applied to the inner wall surface of the stator 31. When the stator 31 is connected to the bushing body 21, the adhesive 312 bonds the bushing body 21 and the stator 31 together.

In some embodiments, a length of the stator 31 is less than or equal to a length of the bushing body 21.

It should be noted that a dimension of the stator 31 in the left-right direction is smaller than a dimension of the bushing body 21 in the left-right direction, i.e., the length of the stator 31 is less than the length of the bushing body 21, ensuring that the bushing body 21 may stably seal the stator slots 311 in the axial direction of the stator 31, reducing the flow of cooling oil into the air gap.

In some embodiments, the length of the stator 31 is B, the length of the bushing body 21 is C, and 2 mm ≤ C - B ≤ 6 mm.

For example, a difference between the length of the bushing body 211 and the length of the stator 31 may be 2 mm, 3 mm, 4 mm, 5 mm, 5.5 mm, or 6 mm.

It should be noted that when the length of the bushing body 21 is too long, the bushing body 21 occupies internal space of the motor, resulting in an excessively large overall volume of the motor. When the length of the bushing body 21 is too short, the sealing performance of the bushing body 21 for the stator slots 311 may be adversely affected. Ensuring that the bushing body 21 may stably seal the stator slots 311 in the axial direction of the stator 31 reduces the likelihood of cooling medium flowing into the air gap and improves the reliability of the bushing body 21 in blocking the cooling medium.

In some embodiments, a radial dimension of the positioning ring 22 relative to the stator 31 is smaller than a radial dimension of the stator slot 311 relative to the stator 31, ensuring the smoothness of the flow of cooling medium within the stator slot 311 and reducing the blocking of the cooling medium by the positioning ring 22.

In some embodiments, as illustrated in FIGS. 10 and 11, the bushing 2 further includes a support portion 23. The support portion 23 is connected to the bushing body 21. One end of the support portion 23 at least partially extends into the stator slot 311 on the stator 31, and the support portion 23 extends along the axial direction of the bushing body 21.

The support portion 23 is connected to the outer wall surface of the bushing body 21. A cross-section of the support portion 23 in the radial direction of the bushing body 21 may be rectangular, elliptical, or trapezoidal, etc., which is not limited here. The support plate 2 extends along the axial direction of the bushing body 21.

In this embodiment, by arranging the support portion 23 connected to the bushing body 21 and having one end at least partially extend into the stator slot 311, the radial opening of the stator slot 311 may be better sealed, and the bushing body 21 will not rotate arbitrarily relative to the stator 31, improving the stability of the connection between the bushing body 21 and the stator 31. Meanwhile, the support portion 23 may also support the winding 33 in the stator slot 311, making the winding 33 more secure.

In some embodiments, a plurality of support portions 23 are included, and the plurality of support portions 23 are arranged at intervals along the circumferential direction of the bushing body 21, which may make the overall force on the bushing body 21 more uniform, facilitating the improvement of the stability of the overall structure.

For example, the number of support portions 23 corresponds one-to-one to the number of stator slots 311, so that the radial opening of each stator slot 311 may be sealed by a support portion 23, and the winding in each stator slot 311 may be supported by a support portion 23, improving the stability of the overall structure.

In some embodiments, the support portion 23 is integrally formed with the bushing body 21.

It may be understood that the support portion 23 being integrally formed with the bushing body 21 reduces the process of connecting the support portion 23 and the bushing body 21, and no additional connecting member is required between the support portion 23 and the bushing body 21, facilitating the processing of the support portion 23 and improving the overall processing efficiency.

For example, the support portion 23 and the bushing body 21 may be integrally formed by injection molding or stamping. Those skilled in the art may choose the manner of integrally forming the support portion 23 and the bushing body 21 according to needs, which is not limited here.

In some embodiments, as illustrated in FIG. 11, the bushing 2 further includes a first expansion portion 24. The first expansion portion 24 is connected to the support portion 23, and the first expansion portion 24 is located within the stator slot 311, and extends along the radial direction of the bushing body 21.

It should be noted that during assembly, the first expansion portion 24 is first connected to the bushing body 21, then the bushing body 21 is inserted into the stator 31, and finally the assembly is heated. The first expansion portion 24 may expand after being heated, which may fix the bushing body 21 and the stator 31 more firmly. Meanwhile, under the expansion force after the first expansion portion 24 expands, the windings in the stator slot 311 may be brought into tighter contact, improving overall rigidity and facilitating improvement of vehicle NHV (Noise, Vibration, Harshness).

For example, a plurality of first expansion portions 24 may be arranged on each support portion 23, and the plurality of first expansion portions 24 are spaced apart along the axial direction of the bushing body 21. Of course, one first expansion portion 24 may be arranged on each support portion 23, and the one first expansion portion 24 extends along the length direction of the support portion 23. Optionally, the first expansion portion 24 and the support portion 23 are bonded by adhesive.

In some embodiments, as illustrated in FIG. 11, the bushing 2 further includes a second expansion portion 25. The second expansion portion 25 is connected to the support portion 23, and the second expansion portion 25 is located within the stator slot 311, and extends along the circumferential direction of the bushing body 21.

It should be noted that before the bushing body 21 is installed into the stator 31, the second expansion portion 25 needs to be connected to the support portion 23 first. After the bushing body 21 is installed into the stator 31, the assembly is then heated. After being heated, the second expansion portion 25 expands and is brought into tighter contact with a side wall of the stator slot 311, enabling the bushing body 21 and the stator 31 to be firmly connected.

For example, second expansion portions 25 are connected to two opposite sides of the support portion 23, and each second expansion portion 25 abuts against one side wall of the stator slot 311. Of course, the second expansion portion 25 may be arranged on one side of the support portion 23, which may be selected by those skilled in the art and is not limited here. Optionally, the second expansion portion 25 and the support portion 23 are bonded by adhesive.

In a second aspect, the present disclosure provides a motor, including the motor oil-cooling structure as described above, and a housing 6. The housing 6 has a step 61 abutting against the energy storage ring 1. It should be noted that the step 61 may abut against the axial end surface of the energy storage ring 1, and/or abut against the circumferential side surface of the energy storage ring 1. Specifically, it may be determined based on the direction of the pressing force applied by the outer ring 121 and the inner ring 122 to the sealing plate 5. That is, when the pressing force applied by the outer ring 121 and the inner ring 122 to the sealing plate 5 is an axial force, the step 61 may be designed to abut against the axial end surface of the energy storage ring 1, ensuring that the outer ring 121 and the inner ring 122 are always in a compressed state, providing axial support and limitation. When the pressing force applied by the outer ring 121 and the inner ring 122 to the sealing plate 5 is a radial force, the step 61 may be designed to abut against the circumferential side surface of the energy storage ring 1, i.e., sleeved around the outer periphery of the energy storage ring 1, ensuring that the outer ring 121 and the inner ring 122 are always in a compressed state, forming sealing structures on both the inner and outer sides, and providing radial support and limitation.

The specific implementation and principle are the same as those in the above embodiments, and may bring the same or similar technical effects. Details are not repeated here. For details, reference may be made to the description of the above motor oil-cooling structure embodiments.

It should be noted that, relational terms here such as "first" and "second" are used merely to distinguish one entity or operation from another entity or operation, and do not necessarily require or imply any such actual relationship or order between these entities or operations. Furthermore, the terms "include", "comprise", or any other variants thereof are intended to cover non-exclusive inclusion, such that a process, method, article, or apparatus that includes a series of elements includes not only those elements but also other elements not expressly listed, or also includes elements inherent to such process, method, article, or apparatus. In the absence of further restrictions, an element defined by the phrase "including a ..." does not preclude the presence of additional identical elements in the process, method, article, or apparatus that includes that element.

The above descriptions are merely specific implementations of the present disclosure, enabling those skilled in the art to understand or implement the present disclosure. Various modifications to these embodiments will be readily apparent to those skilled in the art. The generic principles defined here may be implemented in other embodiments without departing from the spirit or scope of the present disclosure. Therefore, the present disclosure will not be limited to the embodiments described herein, but shall be accorded the widest scope consistent with the principles and novel features disclosed here.

## Claims

1. A motor oil-cooling structure, comprising an energy storage ring and a bushing coaxially arranged along an axial direction of a motor,
wherein the bushing is coaxially sleeved between a stator and a rotor, and a plurality of oil passing grooves are correspondingly formed between an outer circumferential surface of the bushing and a plurality of stator slots;
the energy storage ring comprises an outer ring and an inner ring coaxially sleeved, an oil cavity is formed between the outer ring and the inner ring for accommodating a portion of a winding extending out of the stator slots, and the oil cavity is in communication with the plurality of oil passing grooves; and
an end surface of the outer ring facing the stator in an axial direction of the outer ring is at least partially connected to an axial end surface of the stator, and an end surface of the inner ring facing the bushing in an axial direction of the inner ring is at least partially connected to an axial end surface of the bushing.

2. The motor oil-cooling structure according to claim 1, wherein an end surface of the outer ring away from the stator in the axial direction of the outer ring and an end surface of the inner ring away from the bushing in the axial direction of the inner ring are connected via a sealing portion, and at least one of the outer ring, the inner ring, and the sealing portion has an oil inlet in communication with the oil cavity.

3. The motor oil-cooling structure according to claim 1 or 2, wherein the oil cavity is an annular groove structure arranged coaxially with the energy storage ring.

4. The motor oil-cooling structure according to any one of claims 1 to 3, further comprising a sealing plate arranged coaxially with the energy storage ring and the bushing, wherein the sealing plate has an annular structure, is connected to the axial end surface of the bushing, and is located between the energy storage ring and the bushing;
the end surface of the outer ring facing the stator in the axial direction of the outer ring is at least partially connected to an outer edge portion of the sealing plate, and the end surface of the inner ring facing the bushing in the axial direction of the inner ring is at least partially connected to an inner edge portion of the sealing plate;
an end surface of the sealing plate facing the stator is arranged in contact with the axial end surface of the stator;
the sealing plate has oil passing holes corresponding one-to-one to the plurality of oil passing grooves along a circumferential direction of the sealing plate, and the oil passing holes are configured to communicate the oil cavity with the oil passing grooves.

5. The motor oil-cooling structure according to claim 4, wherein a shape of the oil passing hole matches a shape of an axial end surface of the oil passing groove, and a projection of the oil passing groove in the axial direction of the sealing plate falls within a projection of the oil passing hole.

6. The motor oil-cooling structure according to claim 4 or 5, wherein the sealing plate has an elastic structure.

7. The motor oil-cooling structure according to any one of claims 4 to 6, wherein the sealing plate is integrally formed with the bushing.

8. The motor oil-cooling structure according to any one of claims 4 to 7, wherein the end surface of the outer ring facing the stator in the axial direction of the outer ring has a first annular groove; the end surface of the inner ring facing the bushing in the axial direction of the inner ring has a second annular groove; and a first sealing ring and a second sealing ring are correspondingly arranged in the first annular groove and the second annular groove, respectively.

9. The motor oil-cooling structure according to any one of claims 4 to 8, wherein the sealing plate has a third engaging groove engaging with the outer ring, and the outer ring engages with the third engaging groove to form a first sealing structure; and the sealing plate has a fourth engaging groove engaging with the inner ring, and the inner ring engages with the fourth engaging groove to form a second sealing structure.

10. The motor oil-cooling structure according to any one of claims 1 to 9, wherein the outer circumferential surface of the bushing is arranged in contact with the stator to isolate each of the oil passing grooves.

11. The motor oil-cooling structure according to any one of claims 1 to 10, wherein the bushing comprises a bushing body, an outer wall surface of the bushing body is arranged in contact with an inner wall surface of the stator, and the bushing body extends along the axial direction of the stator.

12. The motor oil-cooling structure according to claim 11, wherein the stator slots extend along the axial direction of the stator and are configured for placing the winding, and an opening of each stator slot in a radial direction of the stator is sealed by the bushing body to form a corresponding one of the oil passing grooves.

13. The motor oil-cooling structure according to claim 11 or 12, wherein the bushing further comprises a positioning ring, the positioning ring is connected to the bushing body, is located on one axial side of the bushing body, and surrounds the bushing body in a circumferential direction of the bushing body, and the positioning ring is adapted to be in contact with an end portion of the stator.

14. The motor oil-cooling structure according to any one of claims 11 to 13, wherein the bushing further comprises a support portion, the support portion is connected to the bushing body, one end of the support portion is adapted to at least partially extend into the stator slot, and the support portion extends along the axial direction of the bushing body.

15. The motor oil-cooling structure according to claim 14, wherein a plurality of the support portions are comprised and are arranged at intervals along the circumferential direction of the bushing body; and/or
the support portion is integrally formed with the bushing body.

16. The motor oil-cooling structure according to claim 14 or 15, wherein the bushing further comprises a first expansion portion, the first expansion portion is connected to the support portion, is located on a side of the support portion away from the bushing body, and extends along the radial direction of the bushing body; and/or
the bushing further comprises a second expansion portion, the second expansion portion is connected to the support portion, the support portion has a first side and a second side in the circumferential direction of the bushing body, and the second expansion portion is located on at least one of the first side and the second side and extends along the circumferential direction of the bushing body.

17. A motor, comprising the motor oil-cooling structure according to any one of claims 1 to 16, and a housing, wherein the housing has a step abutting against the energy storage ring.
